# EUROPEAN PATENT APPLICATION

(11) **EP 4 270 251 A1**
(43) Date of publication of application: **01.11.2023**
(21) Application number: 23168894.6
(22) Date of filing: 20.04.2023
(51) Int. Cl.: G06N 3/0455, G06N 3/09, G06N 5/02

(54) **A SYSTEM AND METHOD FOR MODEL TRAINING FOR A NEW SIGNAL BASED ON METADATA REPRESENTATIONS OF KNOWN SIGNALS**

(30) Priority: 27.04.2022 US 202263335230 P
(71) Applicant: Saferide Technologies Ltd., Herzliya 4672519 (IL)
(72) Inventor: HENRICHS, Kevin, 63796 Kahl (DE); BLANC, Sebastian Michael, 76297 Stutensee (DE); SHALEV, Yuval, 4434144 Kfar-Saba (IL); APARTSIN, Alexander, 7630235 Rehovot (IL)
(74) Representative: Studio Torta S.p.A.

(57) **Abstract**

A system comprising a processing circuitry configured to: obtain: (a) one or more metadata representations, each representing metadata relating to a signal type of one or more signal types; (b) one or more signal sequences, each signal sequence is an ordered sequence of values associated with a given signal type of the one or more signal types; and (c) at least one new signal sequence, being a new ordered sequence of values, each associated with a label, the at least one new signal sequence is associated with corresponding at least one new signal type, not included in the one or more signal types; train a meta learner autoencoder, capable of mapping at least one given signal sequence and at least one respective metadata representation, being the metadata representation representing the signal type of the given signal sequence into a meta representation vector, wherein the trained meta learner autoencoder comprises a meta learner encoder and a meta learner decoder; determine, based on the metadata representations, a predicted metadata representation representing the at least one new signal type; and train, by utilizing the meta representation vector mapped by the meta learner encoder from the at least one new signal sequence and the predicted metadata representation, a new task model, capable of receiving one or more unlabeled signal sequences associated with the at least one new signal type, and predicting, utilizing the predicted metadata representation and the meta learner encoder, for each of the unlabeled signal sequences, a corresponding label.

## Description

### TECHNICAL FIELD

The invention relates to a system and method for model training for a new signal based on metadata representations of known signals, and specifically based on a knowledge graph of the known signals.

### BACKGROUND

Metadata is data that provides information about other data. The metadata can be organized as a record comprising one or more fields. Each record represents metadata known about a given object, wherein the fields have values that are associated with the given object. Each metadata record is a representation of the information known about the given object. An example of a method for organizing metadata is a knowledge graph.

A knowledge graph is a knowledge base that uses a graph-structured data model or topology to integrate data and knowledge about a given domain. A knowledge graph can be made up of three main components: nodes, edges, and labels. Nodes can represent physical objects, properties, concepts, etc., where any object, place, or person can be a node. An edge defines a relationship between the nodes. The label can be used to represent a description of a given node or edge. The knowledge graph can be built up by so-called triplets or facts: subject, predicate and object. A triplet connects two nodes (subject and object) with a relationship (predicate) in a directed way. Knowledge graphs are used to store interlinked descriptions and metadata about entities - objects, events, situations or abstract concepts - while also encoding the semantics underlying the used terminology.

Signals represent data as a sequence of discrete or continuous values that at any given time can take on one of a finite number of values or can represent a real number within a continuous range of values. Over time these signals can form a time series of values, wherein timestamps are associated with at least some of the values. The signal sequences are an ordered sequence of values associated with a given signal type. In some cases, the signals originate from readings of one or more sensors associated with a physical entity.

Models, for example: Machine Learning (ML) models, can be used to analyze, monitor and predict signal values by using past values of the same signal type. Current model training techniques cannot leverage metadata representations, and specifically a knowledge graph representing known signal types for the training of a model used for predictions of values for a new signal type, since this new signal type is not represented within the knowledge graph. There is thus a need in the art for a new system and method for model training for a new signal based on metadata representation of known signals, and specifically based on a knowledge graph of the known signals.

### GENERAL DESCRIPTION

In accordance with a first aspect of the presently disclosed subject matter, there is provided a system comprising a processing circuitry configured to: obtain: (a) one or more metadata representations, each representing metadata relating to a signal type of one or more signal types; (b) one or more signal sequences, each signal sequence is an ordered sequence of values associated with a given signal type of the one or more signal types; and (c) at least one new signal sequence, being a new ordered sequence of values, each associated with a label, the at least one new signal sequence is associated with corresponding at least one new signal type, not included in the one or more signal types; train a meta learner autoencoder, capable of mapping at least one given signal sequence and at least one respective metadata representation, being the metadata representation representing the signal type of the given signal sequence into a meta representation vector, wherein the trained meta learner autoencoder comprises a meta learner encoder and a meta learner decoder; determine, based on the metadata representations, a predicted metadata representation representing the at least one new signal type; and train, by utilizing the meta representation vector mapped by the meta learner encoder from the at least one new signal sequence and the predicted metadata representation, a new task model, capable of receiving one or more unlabeled signal sequences associated with the at least one new signal type, and predicting, utilizing the predicted metadata representation and the meta learner encoder, for each of the unlabeled signal sequences, a corresponding label.

In some cases, (a) the obtain further includes obtaining a knowledge graph embedding of a knowledge graph, wherein (i) the knowledge graph comprises a plurality of nodes, each node representing metadata relating to a signal type of one or more signal types, and a plurality of edges, each connecting two given nodes of the nodes and each representing a relationship between the two given nodes, and (ii) the knowledge graph embedding comprises one or more vector representations, each representing a node of the nodes or an edge of the edges; (b) the one or more metadata representations are the corresponding one or more vector representations; (c) the at least one respective metadata representation is the at least one respective vector representation being the vector representation representing the node related to the signal type of the given signal sequence; and (d) the predicted metadata representation is a predicted vector representation representing the at least one new signal type and determined based on the knowledge graph.

In some cases, the processing circuitry is further configured to train a new task autoencoder, capable of mapping the at least one new signal sequence into a new task representation sequence, wherein the trained new task autoencoder comprises a new task encoder and a new task decoder; and wherein the training of the new task model further utilizes the new task representation sequence mapped by the new task encoder from the at least one new signal sequence.

In some cases, the processing circuitry is further configured to: receive one or more unlabeled signal sequences associated with the at least one new signal type; and predict, for each of the unlabeled signal sequences, a corresponding predicted label.

In some cases, the prediction of the corresponding predicted label by the new task model can be one or more of: anomaly detection prediction or classification prediction.

In some cases, the meta representation vector has a lower dimension than the given signal sequence.

In some cases, the new task representation sequence has a lower dimension than the at least one new signal sequence.

In some cases, the training of the meta learner autoencoder is performed by: (a) adding noise to at least part of the given signal sequence giving rise to a given noised signal sequence and/or masking at least part of the given signal sequence giving rise to a given masked signal sequence, (b) linking the given noised signal sequence and/or the given masked signal sequence with the predicted metadata representation, and (c) reconstructing the given signal sequence.

In some cases, the determination of the predicted vector representation is performed by: (a) adding a new node representing metadata relating to the at least one new signal type to the knowledge graph, (b) adding one or more new edges, each new edge of the new edges connecting the new node with one of the nodes in the knowledge graph, and (c) determining the predicted vector representation using similarities of the new node to the nodes.

In some cases, the signal sequences and the at least one new signal sequence are read from sensors associated with a physical entity.

In some cases, the physical entity is a vehicle.

In accordance with a second aspect of the presently disclosed subject matter, there is provided a method comprising: obtaining, by a processing circuitry: (a) one or more metadata representations, each representing metadata relating to a signal type of one or more signal types; (b) one or more signal sequences, each signal sequence is an ordered sequence of values associated with a given signal type of the one or more signal types; and (c) at least one new signal sequence, being a new ordered sequence of values, each associated with a label, the at least one new signal sequence is associated with corresponding at least one new signal type, not included in the one or more signal types; training, by the processing circuitry, a meta learner autoencoder, capable of mapping at least one given signal sequence and at least one respective metadata representation, being the metadata representation representing the signal type of the given signal sequence into a meta representation vector, wherein the trained meta learner autoencoder comprises a meta learner encoder and a meta learner decoder; determining, by the processing circuitry, based on the metadata representations, a predicted metadata representation representing the at least one new signal type; and training, by the processing circuitry, by utilizing the meta representation vector mapped by the meta learner encoder from the at least one new signal sequence and the predicted metadata representation, a new task model, capable of receiving one or more unlabeled signal sequences associated with the at least one new signal type, and predicting, utilizing the predicted metadata representation and the meta learner encoder, for each of the unlabeled signal sequences, a corresponding label.

In some cases, (a) the obtaining further includes obtaining a knowledge graph embedding of a knowledge graph, wherein (i) the knowledge graph comprises a plurality of nodes, each node representing metadata relating to a signal type of one or more signal types, and a plurality of edges, each connecting two given nodes of the nodes and each representing a relationship between the two given nodes, and (ii) the knowledge graph embedding comprises one or more vector representations, each representing a node of the nodes or an edge of the edges; (b) the one or more metadata representations are the corresponding one or more vector representations; (c) the at least one respective metadata representation is the at least one respective vector representation being the vector representation representing the node related to the signal type of the given signal sequence; and (d) the predicted metadata representation is a predicted vector representation representing the at least one new signal type and determined based on the knowledge graph.

In some cases, the method further comprising: training, by the processing circuitry, a new task autoencoder, capable of mapping the at least one new signal sequence into a new task representation sequence, wherein the trained new task autoencoder comprises a new task encoder and a new task decoder; and wherein the training of the new task model further utilizes the new task representation sequence mapped by the new task encoder from the at least one new signal sequence.

In some cases, the method further comprising: receiving, by the processing circuitry, one or more unlabeled signal sequences associated with the at least one new signal type; and predicting, by the processing circuitry, for each of the unlabeled signal sequences, a corresponding predicted label.

In some cases, the prediction of the corresponding predicted label by the new task model can be one or more of: anomaly detection prediction or classification prediction.

In some cases, the meta representation vector has a lower dimension than the given signal sequence.

In some cases, the new task representation sequence has a lower dimension than the at least one new signal sequence.

In some cases, the training of the meta learner autoencoder is performed by: (a) adding noise to at least part of the given signal sequence giving rise to a given noised signal sequence and/or masking at least part of the given signal sequence giving rise to a given masked signal sequence, (b) linking the given noised signal sequence and/or the given masked signal sequence with the predicted metadata representation, and (c) reconstructing the given signal sequence.

In some cases, the determination of the predicted vector representation is performed by: (a) adding a new node representing metadata relating to the at least one new signal type to the knowledge graph, (b) adding one or more new edges, each new edge of the new edges connecting the new node with one of the nodes in the knowledge graph, and (c) determining the predicted vector representation using similarities of the new node to the nodes.

In some cases, the signal sequences and the at least one new signal sequence are read from sensors associated with a physical entity.

In some cases, the physical entity is a vehicle.

In accordance with a third aspect of the presently disclosed subject matter, there is provided a non-transitory computer readable storage medium having computer readable program code embodied therewith, the computer readable program code, executable by processing circuitry of a computer to perform a method comprising: obtaining, by a processing circuitry: (a) one or more metadata representations, each representing metadata relating to a signal type of one or more signal types; (b) one or more signal sequences, each signal sequence is an ordered sequence of values associated with a given signal type of the one or more signal types; and (c) at least one new signal sequence, being a new ordered sequence of values, each associated with a label, the at least one new signal sequence is associated with corresponding at least one new signal type, not included in the one or more signal types; training, by the processing circuitry, a meta learner autoencoder, capable of mapping at least one given signal sequence and at least one respective metadata representation, being the metadata representation representing the signal type of the given signal sequence into a meta representation vector, wherein the trained meta learner autoencoder comprises a meta learner encoder and a meta learner decoder; determining, by the processing circuitry, based on the metadata representations, a predicted metadata representation representing the at least one new signal type; and training, by the processing circuitry, by utilizing the meta representation vector mapped by the meta learner encoder from the at least one new signal sequence and the predicted metadata representation, a new task model, capable of receiving one or more unlabeled signal sequences associated with the at least one new signal type, and predicting, utilizing the predicted metadata representation and the meta learner encoder, for each of the unlabeled signal sequences, a corresponding label.

### BRIEF DESCRIPTION OF THE DRAWINGS

In order to understand the presently disclosed subject matter and to see how it may be carried out in practice, the subject matter will now be described, by way of non-limiting examples only, with reference to the accompanying drawings, in which:
**Fig. 1** is a schematic illustration of an exemplary environment for model training for a new signal based on a knowledge graph of known signals, in accordance with the presently disclosed subject matter;
**Fig. 2** is a block diagram schematically illustrating one example of a system for model training for a new signal based on a knowledge graph of known signals, in accordance with the presently disclosed subject matter;
**Fig. 3** is a flowchart illustrating one example of a sequence of operations carried out for a model training for a new signal based on metadata representations of known signals process, in accordance with the presently disclosed subject matter; and
**Fig. 4** is a flowchart illustrating one example of a sequence of operations carried out for a model training for a new signal based on a knowledge graph of known signals process, in accordance with the presently disclosed subject matter

### DETAILED DESCRIPTION

In the following detailed description, numerous specific details are set forth in order to provide a thorough understanding of the presently disclosed subject matter. However, it will be understood by those skilled in the art that the presently disclosed subject matter may be practiced without these specific details. In other instances, well-known methods, procedures, and components have not been described in detail so as not to obscure the presently disclosed subject matter.

In the drawings and descriptions set forth, identical reference numerals indicate those components that are common to different embodiments or configurations.

Unless specifically stated otherwise, as apparent from the following discussions, it is appreciated that throughout the specification discussions utilizing terms such as "generating", "obtaining", "training", "identifying", "providing", "executing" or the like, include action and/or processes of a computer that manipulate and/or transform data into other data, said data represented as physical quantities, e.g., such as electronic quantities, and/or said data representing the physical objects. The terms "computer", "processor", "processing resource", "processing circuitry" and "controller" should be expansively construed to cover any kind of electronic device with data processing capabilities, including, by way of non-limiting example, a personal desktop/laptop computer, a server, a computing system, a communication device, a smartphone, a tablet computer, a smart television, a processor (e.g. digital signal processor (DSP), a microcontroller, a field programmable gate array (FPGA), an application specific integrated circuit (ASIC), etc.), a group of multiple physical machines sharing performance of various tasks, virtual servers co-residing on a single physical machine, any other electronic computing device, and/or any combination thereof.

The operations in accordance with the teachings herein may be performed by a computer specially constructed for the desired purposes or by a general-purpose computer specially configured for the desired purpose by a computer program stored in a non-transitory computer readable storage medium. The term "non-transitory" is used herein to exclude transitory, propagating signals, but to otherwise include any volatile or nonvolatile computer memory technology suitable to the application.

As used herein, the phrase "for example," "such as", "for instance" and variants thereof describe non-limiting embodiments of the presently disclosed subject matter. Reference in the specification to "one case", "some cases", "other cases" or variants thereof means that a particular feature, structure or characteristic described in connection with the embodiment(s) is included in at least one embodiment of the presently disclosed subject matter. Thus, the appearance of the phrase "one case", "some cases", "other cases" or variants thereof does not necessarily refer to the same embodiment(s).

It is appreciated that, unless specifically stated otherwise, certain features of the presently disclosed subject matter, which are, for clarity, described in the context of separate embodiments, may also be provided in combination in a single embodiment. Conversely, various features of the presently disclosed subject matter, which are, for brevity, described in the context of a single embodiment, may also be provided separately or in any suitable sub-combination.

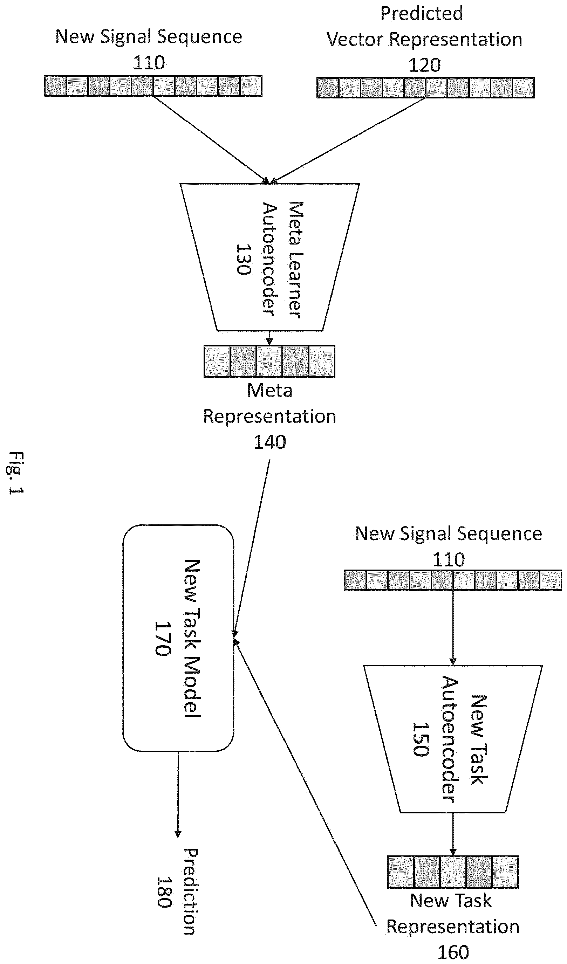

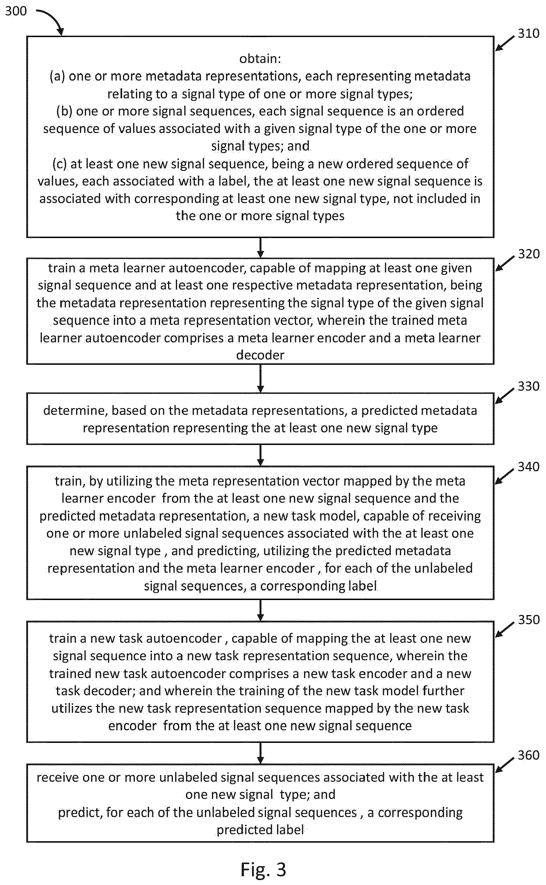

In embodiments of the presently disclosed subject matter, fewer, more and/or different stages than those shown in **Figs. 3-4** may be executed. In embodiments of the presently disclosed subject matter one or more stages illustrated in **Figs. 3-4** may be executed in a different order and/or one or more groups of stages may be executed simultaneously. **Figs. 1-2** illustrate a general schematic of the system architecture in accordance with an embodiment of the presently disclosed subject matter. Each module in **Figs. 1-2** can be made up of any combination of software, hardware and/or firmware that performs the functions as defined and explained herein. The modules in **Figs. 1-2** may be centralized in one location or dispersed over more than one location. In other embodiments of the presently disclosed subject matter, the system may comprise fewer, more, and/or different modules than those shown in **Figs. 1-2****.**

Any reference in the specification to a method should be applied mutatis mutandis to a system capable of executing the method and should be applied mutatis mutandis to a non-transitory computer readable medium that stores instructions that once executed by a computer result in the execution of the method.

Any reference in the specification to a system should be applied mutatis mutandis to a method that may be executed by the system and should be applied mutatis mutandis to a non-transitory computer readable medium that stores instructions that may be executed by the system.

Any reference in the specification to a non-transitory computer readable medium should be applied mutatis mutandis to a system capable of executing the instructions stored in the non-transitory computer readable medium and should be applied mutatis mutandis to method that may be executed by a computer that reads the instructions stored in the non-transitory computer readable medium.

Bearing this in mind, attention is drawn to **Fig. 1****,** is a schematic illustration of an exemplary environment for model training for a new signal based on a knowledge graph of known signals, in accordance with the presently disclosed subject matter.

A model training system for a new signal type leverages metadata representations of known signals, for example: a knowledge graph representing metadata of the known signals, for training a model (for example: an ML model trained for prediction) for a new signal type, which is not represented in the metadata representations, in our example: not represented in the knowledge graph.

As mentioned above, metadata can be organized in one or more records. Each metadata record is a representation of the information known about the given object. An example of a method for organizing metadata is a knowledge graph. A knowledge graph is made up of three main components: nodes, edges, and labels. Nodes can represent physical objects, properties, concepts, etc., where any object, place, or person can be a node. An edge defines a relationship between the nodes. The label can be used to represent a description of a given node or edge. The knowledge graph can be built up by so-called triples or facts: subject, predicate and object. A triple connects two nodes (subject and object) with a relationship (predicate) in a directed way. The knowledge graph can be built from metadata known about the nodes. In some case, the nodes represent signals. As stated, signals represent data as a sequence of discrete or continuous values that at any given time can take on one of a finite number of values or can represent a real number within a continuous range of values. Over time these signals can form a time series of values. The signal sequences are an ordered sequence of values associated with a given signal type. In some cases, the signals originate from readings of one or more sensors associated with a physical entity (for example: a vehicle). A non-limiting example of a knowledge graph representing metadata known about signals, can be of nodes that represent signals' metadata, signal properties, signal groups, etc., and their relationships. A non-limiting example of a part of such a graph can be: "Signal 1 is part of Signal Group 3". Such a knowledge graph of known signal types can be built manually or automatically from metadata describing these signal types. The metadata can originate from a standard describing specific signals and their properties, for example: the J1939 Digital Annex describing automotive signals (such as: "Engine Speed signal", "Driver's Demand Engine - Percent Torque signal, "Rounds Per Minute (RPM) signal", etc.). It is to be noted, that the signals can be general - such as a "J1939 RPM signal", relevant to all J1939 RPM signals, or specific - such as a "Volvo Truck RPM signal", which is specific to a given Volvo vehicle model.

An exemplary method for building a signals knowledge graph from metadata about these signals is described herein: A "Signal Type" node is created and used to classify all signal types. A node is created for each signal type. An edge is added from each signal type node to the "Signal Type" node. A "Signal Group" node that is used to classify all signal groups is created. A node for each signal group is created. An edge is added from each signal group to the signal group type node. Another edge is added from each signal to the correct signal group. A node is created for each signal property. A node is created for each value of each signal property and an edge is added from each signal property value to the corresponding signal property. For each signal and its signal properties (and corresponding signal property values) an edge is added from the corresponding signal node to the node corresponding to the signal property's value node. A node is created for each signal group property. A node is created for each value of each signal group property and an edge is added from each signal group property value to the corresponding signal group property. An edge is added, for each signal group and its signal group properties (and corresponding signal group property values), from the signal group node to the node corresponding to the signal group property's value node. The resulting signals knowledge graph represent our knowledge about these signals. This signals knowledge graph can optionally be extended using expert knowledge by creating nodes manually for: physical entities in the vehicle, abstract sensor groups not captured in sensor metadata description, other entities the expert deems valuable. Expert knowledge can also be used to manually create or update nodes and edges for representing the one or more sensors that are attached to the physical entity. Sensors can be deemed as belonging to a given abstract sensor group. Sensors can have a causal relationship to other sensors, or other relationships can be added, as an expert deems valuable.

It is to be noted that the signals knowledge graph can be built automatically (or partly automatically) by extracting at least part of the above-mentioned information from specifications in various formats (including: DBC files (CAN-bus databases), ontologies (such as: the GENIVI Vehicle Signal Specification (VSS)), tabular protocol specifications (e.g., SAE J1939 Digital Annex) and the AUTomotive Open System ARchitecture (AutoSAR) functional specification, etc.).

A non-limiting example of some metadata information that can be represented in the signals' knowledge graph for the "Engine Speed signal" and the " Driver's Demand Engine - Percent Torque signal" follows:
- Signal_190 -(hasType)-> Signal
- Signal_190 -(hasSignalLabel)-> "Engine Speed"
- Signal_190 -(hasUnit)-> Unit_rpm
- Signal_190 -(hasDataRangeMinimum)-> DataRangeMinimum_0
- Signal_190 -(hasDataRangeMaximum)-> DataRangeMaximum_8031
- Signal_190 -(belongsToParameterGroup)-> SignalGroup_61444
- Signal_512 -(hasType)-> Signal
- Signal_512 -(hasSignalLabel)-> "Driver's Demand Engine - Percent Torque"
- Signal_512 -(hasUnit)-> Unit_percent
- Signal_512 -(hasDataRangeMinimum)-> DataRangeMinimum_-125
- Signal_512 -(hasDataRangeMaximum)-> DataRangeMaximum_125
- Signal_512 -(hasOperationalRangeMinimum)-> OperationalRangeMinimum_0
- Signal_512 -(hasOperationalRangeMaximum)-
   > OperationalRangeMaximum_125
- Signal_512 -(belongsToParameterGroup)-> SignalGroup_61444
- SignalGroup_61444 -(hasType)-> SignalGroup
- SignalGroup_61444 -(hasSignalGroupLabel)-> "Electronic Engine Controller 1"
- Signal Group_61444 -(hasTransmissionRate)-
   > Transmis sionRate_Fixed_rate_of_ 10_to_50_ms_or_engine_speed_dependent

In order for the model training system to utilize the metadata of known signal types as represented within the knowledge graph, the model training system uses graph embeddings. Graph embeddings are vector representations of the nodes of the knowledge graph. The embedding of a knowledge graph translates each node and edge of the knowledge graph, into a vector of a given dimension. For each signal type within the knowledge graph, a corresponding vector representation is generated, such that similar nodes are placed closer to each other in the representation vector space. Knowledge graph embeddings can be generated using algorithms known in the art, such as the TransE algorithm.

Each knowledge graph embeddings vector representations represent a given signal type within the knowledge graph. These vector representations are used by the model training system to train a meta learner autoencoder 130. An Autoencoder is an Artificial Neural Network (ANN) that consists of an encoder and a decoder. The encoder takes input data and maps it to a lower dimensional feature space, whereas the decoder takes this feature space representation and tries to reconstruct the original data. That way, the low dimensional feature space representation contains condensed information about the input data. The meta learner autoencoder 130 is an autoencoder that maps each given signal sequence together with a respective vector representation (being the vector representation representing the node related to the signal type of the given signal sequence) into a meta representation 140. The training of the meta learner autoencoder 130 utilizes training data that includes labeled signal sequences of the known signal types together with the respective vector representation from the knowledge graph. The resulting intermediate low dimensional feature space representation, the meta representation 140, contains condensed information about the signal sequence together with the metadata known about this signal type from the knowledge graph. In some cases, the meta representation 140 has a lower dimension than the given signal sequence. The training of the meta learner autoencoder 130 can be performed by adding noise and/or masking at least part of a given signal sequence of a given signal type. Concatenating the noised signal sequence and/or the masked signal sequence with the vector representation of the given signal type, and reconstructing the given signal sequence. The training process can be repeated for each signal type with the corresponding available signal sequence data until the meta learner autoencoder 130 is trained. At run-time, the model training system can utilize the encoder part of meta learner autoencoder 130 for inference. The trained meta learner autoencoder 130, and specifically the trained encoder part of the meta learner autoencoder 130, can now be "frozen" to represent the metadata known about known signals.

The challenge facing the model training system of the presently disclosed subject matter is how to leverage the knowledge of known signal types when dealing with at least one new signal type and a new task (such as: a prediction model for predicting values of the new signal). It is to be noted that such new signals are a prevalent challenge, as some signals have not been documented and commonly the documentation for some or all signals of a given physical entity are missing. Such a new signal type can be associated, for example, with a new sensor attached to the physical entity. It is to be noted that if there is more than one new signal type, the model training system can utilize multivariate models to deal with two or more new signal types simultaneously. In some cases, the multivariate models deal with a mixture of one or more known signals and one or more new signal types.

To deal with at least one new signal sequence 110 of the at least one new signal type, that has not been represented in the knowledge graph, and was not taken into account when training the already trained ("frozen") meta learner autoencoder 130, the model training system determines a predicted vector representation 120, being a vector representation estimation for the new signal type. The model training system leverages the meta learner autoencoder 130, and specifically the encoder part of the meta learner autoencoder 130, for a completely new task with an unknown signal by determining a metadata representation, for example: a knowledge graph embedding, for the new signal type and use the meta learner autoencoder 130, and specifically the encoder part of the meta learner autoencoder 130, to add valuable information to a newly trained new task model 170.

The determination of the predicted vector representation can be performed by adding a new node representing metadata relating to the new signal type to the knowledge graph, adding one or more new edges, each new edge of the new edges connecting the new node with one of the nodes in the knowledge graph, and determining the predicted vector representation using similarities of the new node to the nodes. It is to be noted that the model training system can, for example, use the already existing node embeddings of the connected nodes and the respective edges to do simple vector addition (known node vector + known edge vector = a predicted vector representation 120) and average over all predicted node vectors retrieved by each pair of known node vector and known edge vector. Alternatively, instead of using an average over the predicted node vectors, the model training system can use a least square fitting method to find a better position of the node vector and to re-optimize an optimization criterion of the knowledge graph embedding algorithm while keeping all other nodes and relationship embeddings fixed.

It is also to be noted that during training and evaluation of a model, the metadata associated with the new signal type may not be known. In production phase, a user needs to manually supply the relevant metadata when adding a new signal type, as the properties of the new signal type may be known to the user.

The model training system now leverages the metadata knowledge embedded in the meta learner autoencoder 130, and specifically in the encoder part of the meta learner autoencoder 130, to add information to new task model 170, trained based on meta representation 140 and the predicted vector representation 120 to include the metadata knowledge of the new signal type. The model training system now trains a new task model 170 utilizing the predicted vector representation 120 and the encoder part of the meta learner autoencoder 130. The new task model can predict labels for unlabeled signal sequences of the at least one new signal type. The training is done based on the meta representation 140, mapped by the encoder part of the meta learner autoencoder 130 from the new signal sequence 110 and the predicted vector representation 120. The trained new task model 170 is capable of receiving one or more unlabeled signal sequences associated with the new signal type, and predicting, utilizing the predicted vector representation 120, the encoder part of the meta learner autoencoder 130, for each of the unlabeled signal sequences, a corresponding label prediction 180. For this purpose, model training system take a sequence of values of the new signal type, concatenates them with the predicted vector representation 120. The "frozen" encoder part of the meta learner encoder 130 is utilized to get meta representation 140. This leverages the meta data of the knowledge graph together with the input new signal sequence 110 when training the new task model 170.

Optionally a trainable new task autoencoder 150 can be also utilized as a feature specific encoder that gets as input new signal sequence 110 and outputs a new task representation 160, which can be used together with the meta representation 140 as input to train the new tasks model 170. At run-time, the model training system can utilize the encoder part of new task autoencoder 150 for inference. This option is used in order to represent the new signal sequences 110 without metadata information by extracting task specific information enabling the new task model 170 to perform its task. The new task autoencoder 150 can be trained similarly to the training of the meta learner encoder 130, when the input used is labeled sequences of the new signal sequence 110.

It is to be noted that the usage of new task autoencoder 150, and specifically the usage of the encoder part of the new task autoencoder 150, is an optional step and the training of the new task model 170 can be performed without the new task representation 160, by using the meta representation 140 only.

It is to be noted that optionally, the model training system, can utilize a multivariate downstream model that takes as input two or more representations of multiple signals. The two or more representation can be concatenated together into a single input.

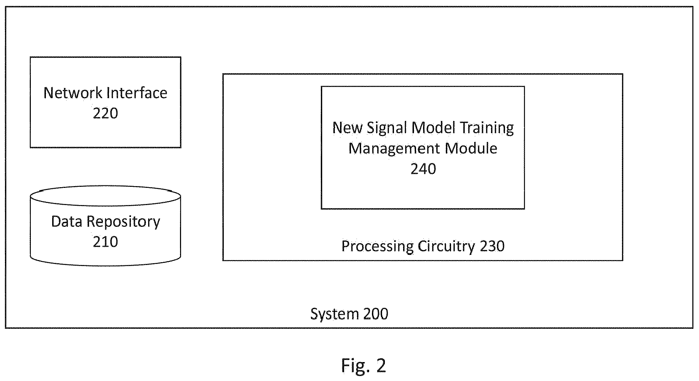

Having briefly described an exemplary environment for model training for a new signal based on a knowledge graph of known signals, attention is drawn to **Fig. 2****,** is a block diagram schematically illustrating one example of a system for model training for a new signal based on a knowledge graph of known signals, in accordance with the presently disclosed subject matter.

According to certain examples of the presently disclosed subject matter, system 200 (please note that the terms "model training system" and "system" are used herein interchangeably) can comprise a network interface 220 enabling connecting the system 200 to a network and enabling it to send and receive data sent thereto through the network, including in some cases receiving information such as: signal sequences, new signal sequences 110, knowledge graphs, knowledge graph embeddings, predicted knowledge graph embeddings 120, one or more models (such as: meta learner autoencoder 130, new task autoencoder 150, new task model 170), meta representation 140, new task representation 160, predictions 180, etc. In some cases, the network interface 220 can be connected to a Local Area Network (LAN), to a Wide Area Network (WAN), to a Controller Area Network bus (CAN-bus), or to the Internet. In some cases, the network interface 220 can connect to a wireless network. It is to be noted that in some cases the information, or part thereof, is transmitted from a physical entity (from example: from a vehicle).

System 200 can further comprise or be otherwise associated with a data repository 210 (e.g., a database, a storage system, a memory including Read Only Memory - ROM, Random Access Memory - RAM, or any other type of memory, etc.) configured to store data, including, inter alia, signal sequences, new signal sequences 110, knowledge graphs, knowledge graph embeddings, predicted knowledge graph embeddings 120, one or more models (such as: meta learner autoencoder 130, new task autoencoder 150, new task model 170), meta representation 140, new task representation 160, predictions 180, etc.

In some cases, data repository 210 can be further configured to enable retrieval and/or update and/or deletion of the data stored thereon. It is to be noted that in some cases, data repository 210 can be distributed. It is to be noted that in some cases, data repository 210 can be stored in on cloud-based storage.

System 200 further comprises processing circuitry 230. Processing circuitry 230 can be one or more processing circuitry units (e.g., central processing units), microprocessors, microcontrollers (e.g., microcontroller units (MCUs)) or any other computing devices or modules, including multiple and/or parallel and/or distributed processing circuitry units, which are adapted to independently or cooperatively process data for controlling relevant system 200 resources and for enabling operations related to system 200 resources.

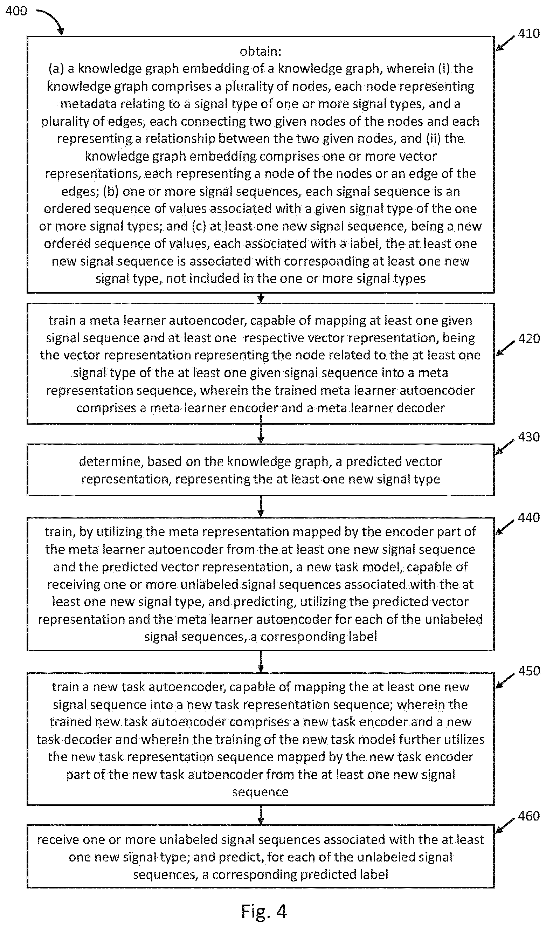

The processing circuitry 230 comprises a new signal model training management module 240, configured to perform: (a) a new signal model training based on metadata representations of known signals process, as further detailed herein, inter alia with reference to Fig. 3; and (b) a new signal model training based on a knowledge graph of known signals process, as further detailed herein, inter alia with reference to Fig. 4.

Turning to **Fig. 3****,** a flowchart illustrating one example of a sequence of operations carried out for a model training for a new signal based on metadata representations of known signals process, in accordance with the presently disclosed subject matter.

According to certain examples of the presently disclosed subject matter, system 200 can be configured to perform a new signal model training based on metadata representations of known signals process 300, e.g., utilizing the new signal model training management module 240.

A model training system 200 for a new signal type leverages metadata representations of known signals for training a model (for example: an ML model trained for prediction) for a new signal type, which is not represented in the metadata representations.

For this purpose, system 200 can be configured to obtain: (a) one or more metadata representations, each representing metadata relating to a signal type of one or more signal types; (b) one or more signal sequences, each signal sequence is an ordered sequence of values associated with a given signal type of the one or more signal types; and (c) at least one new signal sequence 110, being a new ordered sequence of values, each associated with a label, the at least one new signal sequence is associated with corresponding at least one new signal type, not included in the one or more signal types (block 310). It is to be noted that in some cases, at least some of the values of the sequence of values are associated with timestamps. The timestamps may represent a time that the value was read from a physical entity.

After obtaining the metadata representations, the signal sequences and the at least one new signal sequence 110, system 200 can be further configured to train a meta learner autoencoder 130, capable of mapping at least one given signal sequence and at least one respective metadata representation, being the metadata representation representing the signal type of the given signal sequence into a meta representation vector 140, wherein the trained meta learner autoencoder 130 comprises a meta learner encoder and a meta learner decoder (block 320). It is to be noted that, in some cases, the meta representation 140 sequence has a lower dimension than the given signal sequence 110. In some cases, the system 200 can utilize multivariate models to deal with two or more new signal types simultaneously.

After training the meta learner autoencoder 130, system 200 is further configured to determine, based on the metadata representations, a predicted metadata representation representing the at least one new signal type (block 330). The determination of the predicted metadata representation can be performed based on the obtained metadata representations. It is also to be noted that during training and evaluation of a model, the metadata associated with the new signal type may not be known. In production phase, a user needs to manually supply the relevant metadata when adding a new signal type, as the properties of the new signal type may be known to the user.

System 200 can now be configured to train, by utilizing the meta representation vector 140 mapped by the meta learner encoder part of the meta learner autoencoder 130 from the at least one new signal sequence 110 and the predicted metadata representation, a new task model 170, capable of receiving one or more unlabeled signal sequences associated with the at least one new signal type, and predicting, utilizing the predicted metadata representation and the meta learner encoder part of the meta learner autoencoder 130, for each of the unlabeled signal sequences, a corresponding label (block 340).

After training the new task model 170, system 200 is optionally further configured to train a new task autoencoder 150, capable of mapping the at least one new signal sequence 110 into a new task representation 160 sequence; wherein the trained new task autoencoder 150 comprises a new task encoder and a new task decoder and wherein the training of the new task model 170 further utilizes the new task representation 160 sequence mapped by the new task encoder part of the new task autoencoder 150 from the at least one new signal sequence 110 (block 350). It is to be noted that, in some cases, the new task representation 160 sequence has a lower dimension than the new signal sequence 110.

After training of the new task model 170, system 200 is further configured to receive one or more unlabeled signal sequences associated with the at least one new signal type; and predict, for each of the unlabeled signal sequences, a corresponding predicted label (block 360). The prediction 180 of the corresponding predicted label by the new task model can be one or more of: anomaly detection prediction or classification prediction.

It is to be noted that, with reference to Fig. 3, some of the blocks can be integrated into a consolidated block or can be broken down to a few blocks and/or other blocks may be added. Furthermore, in some cases, the blocks can be performed in a different order than described herein. It is to be further noted that some of the blocks are optional (for example, blocks 350 and 360 can be optional blocks). It should be also noted that whilst the flow diagram is described also with reference to the system elements that realizes them, this is by no means binding, and the blocks can be performed by elements other than those described herein.

**Fig. 4** is a flowchart illustrating one example of a sequence of operations carried out for a new signal model training based on a knowledge graph of known signals process, in accordance with the presently disclosed subject matter.

According to certain examples of the presently disclosed subject matter, system 200 can be configured to perform a new signal model training based on a knowledge graph of known signals process 400, e.g., utilizing the new signal model training management module 240.

A model training system 200 for a new signal type leverages a knowledge graph representing metadata of known signals for training a model (for example: an ML model trained for prediction) for a new signal type, which is not represented in the knowledge graph.

For this purpose, system 200 can be configured to obtain: (a) a knowledge graph embedding of a knowledge graph, wherein (i) the knowledge graph comprises a plurality of nodes, each node representing metadata relating to a signal type of one or more signal types, and a plurality of edges, each connecting two given nodes of the nodes and each representing a relationship between the two given nodes, and (ii) the knowledge graph embedding comprises one or more vector representations, each representing a node of the nodes or an edge of the edges; (b) one or more signal sequences, each signal sequence is an ordered sequence of values associated with a given signal type of the one or more signal types; and (c) at least one new signal sequence 110, being a new ordered sequence of values, each associated with a label, the at least one new signal sequence is associated with corresponding at least one new signal type, not included in the one or more signal types (block 410). It is to be noted that in some cases, at least some of the values of the sequence of values are associated with timestamps. The timestamps may represent a time that the value was read from the physical entity.

After obtaining the knowledge graph embedding, the signal sequences and the at least one new signal sequence 110, system 200 can be further configured to train a meta learner autoencoder 130, capable of mapping at least one given signal sequence and at least one respective vector representation, being the vector representation representing the node related to the at least one signal type of the at least one given signal sequence into a meta representation sequence 140, wherein the trained meta learner autoencoder 130 comprises a meta learner encoder and a meta learner decoder (block 420). It is to be noted that, in some cases, the meta representation 140 sequence has a lower dimension than the given signal sequence 110. In some cases, the system 200 can utilize models to deal with two or more new signal types simultaneously.

After training the meta learner autoencoder 130, system 200 is further configured to determine, based on the knowledge graph, a predicted vector representation 120, representing the at least one new signal type (block 430). The determination of the predicted vector representation can be performed by adding a new node representing metadata relating to the new signal type to the knowledge graph, adding one or more new edges, each new edge of the new edges connecting the new node with one of the nodes in the knowledge graph, and determining the predicted vector representation using similarities of the new node to the nodes. It is to be noted that the model training system can use the already existing node embeddings of the connected nodes and the respective edges to do simple vector addition (known node vector + known edge vector = a predicted vector representation 120) and average over all predicted node vectors retrieved by each pair of known node vector and known edge vector. It is also to be noted that during training and evaluation of a model, the metadata associated with the new signal type may not be known. In production phase, a user needs to manually supply the relevant metadata when adding a new signal type, as the properties of the new signal type may be known to the user.

System 200 can now be configured to train, by utilizing the meta representation 140 mapped by the encoder part of the meta learner autoencoder 130 from the at least one new signal sequence 110 and the predicted vector representation 120, a new task model 170, capable of receiving one or more unlabeled signal sequences associated with the at least one new signal type, and predicting, utilizing the predicted vector representation 120 and the meta learner autoencoder 130 for each of the unlabeled signal sequences, a corresponding label (block 440).

After training the new task model 170, system 200 is optionally further configured to train a new task autoencoder 150, capable of mapping the at least one new signal sequence 110 into a new task representation 160 sequence; wherein the trained new task autoencoder 150 comprises a new task encoder and a new task decoder and wherein the training of the new task model 170 further utilizes the new task representation 160 sequence mapped by the new task encoder part of the new task autoencoder 150 from the at least one new signal sequence 110 (block 450). It is to be noted that, in some cases, the new task representation 160 sequence has a lower dimension than the new signal sequence 110.

After training of the new task model 170, system 200 is further configured to receive one or more unlabeled signal sequences associated with the at least one new signal type; and predict, for each of the unlabeled signal sequences, a corresponding predicted label (block 460). The prediction 180 of the corresponding predicted label by the new task model can be one or more of: anomaly detection prediction or classification prediction.

It is to be noted that, with reference to Fig. 4, some of the blocks can be integrated into a consolidated block or can be broken down to a few blocks and/or other blocks may be added. Furthermore, in some cases, the blocks can be performed in a different order than described herein. It is to be further noted that some of the blocks are optional (for example, blocks 450 and 460 can be optional blocks). It should be also noted that whilst the flow diagram is described also with reference to the system elements that realizes them, this is by no means binding, and the blocks can be performed by elements other than those described herein.

It is to be understood that the presently disclosed subject matter is not limited in its application to the details set forth in the description contained herein or illustrated in the drawings. The presently disclosed subject matter is capable of other embodiments and of being practiced and carried out in various ways. Hence, it is to be understood that the phraseology and terminology employed herein are for the purpose of description and should not be regarded as limiting. As such, those skilled in the art will appreciate that the conception upon which this disclosure is based may readily be utilized as a basis for designing other structures, methods, and systems for carrying out the several purposes of the presently disclosed subject matter.

It will also be understood that the system according to the presently disclosed subject matter can be implemented, at least partly, as a suitably programmed computer. Likewise, the presently disclosed subject matter contemplates a computer program being readable by a computer for executing the disclosed method. The presently disclosed subject matter further contemplates a machine-readable memory tangibly embodying a program of instructions executable by the machine for executing the disclosed method.

## Claims

1. A system comprising a processing circuitry configured to:
obtain:
(a) one or more metadata representations, each representing metadata relating to a signal type of one or more signal types;
(b) one or more signal sequences, each signal sequence is an ordered sequence of values associated with a given signal type of the one or more signal types; and
(c) at least one new signal sequence, being a new ordered sequence of values, each associated with a label, the at least one new signal sequence is associated with corresponding at least one new signal type, not included in the one or more signal types;
train a meta learner autoencoder, capable of mapping at least one given signal sequence and at least one respective metadata representation, being the metadata representation representing the signal type of the given signal sequence into a meta representation vector, wherein the trained meta learner autoencoder comprises a meta learner encoder and a meta learner decoder;
determine, based on the metadata representations, a predicted metadata representation representing the at least one new signal type; and
train, by utilizing the meta representation vector mapped by the meta learner encoder from the at least one new signal sequence and the predicted metadata representation, a new task model, capable of receiving one or more unlabeled signal sequences associated with the at least one new signal type, and predicting, utilizing the predicted metadata representation and the meta learner encoder, for each of the unlabeled signal sequences, a corresponding label.

2. The system of claim 1, wherein:
(a) the obtain further includes obtaining a knowledge graph embedding of a knowledge graph, wherein (i) the knowledge graph comprises a plurality of nodes, each node representing metadata relating to a signal type of one or more signal types, and a plurality of edges, each connecting two given nodes of the nodes and each representing a relationship between the two given nodes, and (ii) the knowledge graph embedding comprises one or more vector representations, each representing a node of the nodes or an edge of the edges;
(b) the one or more metadata representations are the corresponding one or more vector representations;
(c) the at least one respective metadata representation is the at least one respective vector representation being the vector representation representing the node related to the signal type of the given signal sequence; and
(d) the predicted metadata representation is a predicted vector representation representing the at least one new signal type and determined based on the knowledge graph.

3. The system of claim 1, wherein the processing circuitry is further configured to train a new task autoencoder, capable of mapping the at least one new signal sequence into a new task representation sequence, wherein the trained new task autoencoder comprises a new task encoder and a new task decoder; and wherein the training of the new task model further utilizes the new task representation sequence mapped by the new task encoder from the at least one new signal sequence.

4. The system of claim 1, wherein the processing circuitry is further configured to:
receive one or more unlabeled signal sequences associated with the at least one new signal type; and
predict, for each of the unlabeled signal sequences, a corresponding predicted label.

5. The system of claim 4, wherein the prediction of the corresponding predicted label by the new task model can be one or more of: anomaly detection prediction or classification prediction.

6. The system of claim 1, wherein the training of the meta learner autoencoder is performed by: (a) adding noise to at least part of the given signal sequence giving rise to a given noised signal sequence and/or masking at least part of the given signal sequence giving rise to a given masked signal sequence, (b) linking the given noised signal sequence and/or the given masked signal sequence with the predicted metadata representation, and (c) reconstructing the given signal sequence.

7. The system of claim 2, wherein the determination of the predicted vector representation is performed by: (a) adding a new node representing metadata relating to the at least one new signal type to the knowledge graph, (b) adding one or more new edges, each new edge of the new edges connecting the new node with one of the nodes in the knowledge graph, and (c) determining the predicted vector representation using similarities of the new node to the nodes.

8. The system of claim 1, wherein the signal sequences and the at least one new signal sequence are read from sensors associated with a physical entity.

9. A method comprising:
obtaining, by a processing circuitry:
(a) one or more metadata representations, each representing metadata relating to a signal type of one or more signal types;
(b) one or more signal sequences, each signal sequence is an ordered sequence of values associated with a given signal type of the one or more signal types; and
(c) at least one new signal sequence, being a new ordered sequence of values, each associated with a label, the at least one new signal sequence is associated with corresponding at least one new signal type, not included in the one or more signal types;
training, by the processing circuitry, a meta learner autoencoder, capable of mapping at least one given signal sequence and at least one respective metadata representation, being the metadata representation representing the signal type of the given signal sequence into a meta representation vector, wherein the trained meta learner autoencoder comprises a meta learner encoder and a meta learner decoder;
determining, by the processing circuitry, based on the metadata representations, a predicted metadata representation representing the at least one new signal type; and
training, by the processing circuitry, by utilizing the meta representation vector mapped by the meta learner encoder from the at least one new signal sequence and the predicted metadata representation, a new task model, capable of receiving one or more unlabeled signal sequences associated with the at least one new signal type, and predicting, utilizing the predicted metadata representation and the meta learner encoder, for each of the unlabeled signal sequences, a corresponding label.

10. The method of claim 9, wherein:
(a) the obtaining further includes obtaining a knowledge graph embedding of a knowledge graph, wherein (i) the knowledge graph comprises a plurality of nodes, each node representing metadata relating to a signal type of one or more signal types, and a plurality of edges, each connecting two given nodes of the nodes and each representing a relationship between the two given nodes, and (ii) the knowledge graph embedding comprises one or more vector representations, each representing a node of the nodes or an edge of the edges;
(b) the one or more metadata representations are the corresponding one or more vector representations;
(c) the at least one respective metadata representation is the at least one respective vector representation being the vector representation representing the node related to the signal type of the given signal sequence; and
(d) the predicted metadata representation is a predicted vector representation representing the at least one new signal type and determined based on the knowledge graph.

11. The method of claim 9, further comprising: training, by the processing circuitry, a new task autoencoder, capable of mapping the at least one new signal sequence into a new task representation sequence, wherein the trained new task autoencoder comprises a new task encoder and a new task decoder; and wherein the training of the new task model further utilizes the new task representation sequence mapped by the new task encoder from the at least one new signal sequence.

12. The method of claim 9, further comprising:
receiving, by the processing circuitry, one or more unlabeled signal sequences associated with the at least one new signal type; and
predicting, by the processing circuitry, for each of the unlabeled signal sequences, a corresponding predicted label.

13. The method of claim 9, wherein the training of the meta learner autoencoder is performed by: (a) adding noise to at least part of the given signal sequence giving rise to a given noised signal sequence and/or masking at least part of the given signal sequence giving rise to a given masked signal sequence, (b) linking the given noised signal sequence and/or the given masked signal sequence with the predicted metadata representation, and (c) reconstructing the given signal sequence.

14. The method of claim 10, wherein the determination of the predicted vector representation is performed by: (a) adding a new node representing metadata relating to the at least one new signal type to the knowledge graph, (b) adding one or more new edges, each new edge of the new edges connecting the new node with one of the nodes in the knowledge graph, and (c) determining the predicted vector representation using similarities of the new node to the nodes.

15. A non-transitory computer readable storage medium having computer readable program code embodied therewith, the computer readable program code, executable by processing circuitry of a computer to perform a method comprising:
obtaining, by a processing circuitry:
(a) one or more metadata representations, each representing metadata relating to a signal type of one or more signal types;
(b) one or more signal sequences, each signal sequence is an ordered sequence of values associated with a given signal type of the one or more signal types; and
(c) at least one new signal sequence, being a new ordered sequence of values, each associated with a label, the at least one new signal sequence is associated with corresponding at least one new signal type, not included in the one or more signal types;
training, by the processing circuitry, a meta learner autoencoder, capable of mapping at least one given signal sequence and at least one respective metadata representation, being the metadata representation representing the signal type of the given signal sequence into a meta representation vector, wherein the trained meta learner autoencoder comprises a meta learner encoder and a meta learner decoder;
determining, by the processing circuitry, based on the metadata representations, a predicted metadata representation representing the at least one new signal type; and
training, by the processing circuitry, by utilizing the meta representation vector mapped by the meta learner encoder from the at least one new signal sequence and the predicted metadata representation, a new task model, capable of receiving one or more unlabeled signal sequences associated with the at least one new signal type, and predicting, utilizing the predicted metadata representation and the meta learner encoder, for each of the unlabeled signal sequences, a corresponding label.
